(19) Europäisches Patentamt
European Patent Office
Office européen des brevets

(11) Publication number: 0 052 854
B1

(12) **EUROPEAN PATENT SPECIFICATION**

(45) Date of publication of patent specification: **02.07.86**

(51) Int. Cl.[4]: **C 08 L 71/04**, C 08 L 51/06, C 08 L 51/04

(21) Application number: **81109743.5**

(22) Date of filing: **17.11.81**

(54) **Polyphenylene oxide composition.**

(30) Priority: **20.11.80 JP 164370/80**

(43) Date of publication of application: **02.06.82 Bulletin 82/22**

(45) Publication of the grant of the patent: **02.07.86 Bulletin 86/27**

(84) Designated Contracting States: **BE DE FR GB IT NL**

(58) References cited: **US-A-4 020 124**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Ueno, Katsuji**
**17-20, Hirakatakaminocho**
**Hirakata-shi (JP)**
Inventor: **Inoue, Haruo**
**120, Gungesenbonda**
**Mikagecho Higashinada-ku, Kobe (JP)**
Inventor: **Furuta, Akihiro**
**26, Tamagawa-1-chome**
**Takatsuki-shi (JP)**
Inventor: **Ebisu, Satoshi**
**29-7, Ooike-2-chome**
**Ibaraki-shi (JP)**

(74) Representative: **Vossius Vossius Tauchner Heunemann Rauh**
**Siebertstrasse 4 P.O. Box 86 07 67**
**D-8000 München 86 (DE)**

**EP 0 052 854 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a polyphenylene oxide composition excellent in heat resistance, weather resistance and impact resistance, and more particularly to a composition excellent in heat resistance, weather resistance and impact resistance which comprises (a) polyphenylene oxide, (b) an alkenyl aromatic polymer modified with a diene rubber and (c) a copolymer produced by graft-polymerizing an alkenyl aromatic monomer onto an ethylene-α-olefin-polyene terpolymer.

Though polyphenylene oxide is a resin having excellent properties such as heat resistance, chemical resistance, mechanical properties, electrical properties, etc., it has faults such as poor moldability, low impact resistance, etc. As a method for overcoming these faults, there is known the blending of alkenyl aromatic polymer miscible with polyphenylene oxide into the latter for the purpose of improving its moldability and there is known the blending and dispersing of rubber for the purpose of improving the impact resistance. Particularly, the blending of alkenyl aromatic polymer modified with rubber is advantageous in that its moldability and impact resistance can be improved simultaneously. However, this alkenyl aromatic polymer modified with rubber usually contains a diene rubber as the rubber component, so that it has the fault that it rapidly becomes fragile when exposed to a high temperature or exposed to outdoor conditions for a long period of time, and the fault creates a problem.

In view of above, the present inventors conducted a study with the aim of improving heat resistance and weather resistance of a composition comprising polyphenylene oxide and an alkenyl aromatic polymer modified with diene rubber. As a result, it was found that its heat resistance can greatly be improved and that its impact resistance can also be improved greatly by adding thereto a copolymer produced by graft-polymerizing an alkenyl aromatic monomer onto an ethylene-α-olefin-polyene terpolymer. Based on this finding, this invention was achieved.

It is an object of this invention to provide a novel polyphenylene oxide composition excellent in heat resistance, weather resistance and impact resistance.

Other objects and advantages of this invention will become apparent from the description given below.

According to this invention, there is provided a polyphenylene oxide composition comprising (a) polyphenylene oxide, (b) an alkenyl aromatic polymer modified with a diene rubber and (c) a copolymer produced by graft copolymerizing an alkenyl aromatic monomer onto an ethylene-α-olefin-polyene terpolymer in which the ratio by weight of the ethylene-α-olefin-polyene terpolymer part to the part of the polymer of alkenyl aromatic monomer is in the range of 1/20 to 20/1, the ratio by weight of the component (a) to component (b) being in the range of 1/10 to 10/1, and the amount of the component (c) being 1 to 100 parts by weight per 100 parts by weight of the sum of the component (a) and component (b).

Next, the effect of this invention will be described. If a diene rubber is used in place of component (c), impact resistance of the composition can be improved, but the impact resistance falls steeply when the composition is exposed to a high temperature due to deterioration of the diene rubber. If an ethylene-α-olefin-polyene terpolymer which is not graft polymerized is used in place of component (c), the drop in impact resistance due to deterioration of the rubber at high temperature can be overcome, but the effect in improving impact resistance is relatively small. Thus, a result whereby impact resistance is improved greatly and drop in impact resistance due to thermal deterioration at high temperature is quite small can be secured only by using a copolymer produced by graft-polymerizing an alkenyl aromatic monomer onto ethylene-α-olefin-polyene terpolymer as component (c). This finding cannot be expected from the prior techniques. It is considered that this effect is ascribable to the graft-copolymerization of an alkenyl aromatic compound onto ethylene-α-olefin-polyene terpolymer by which the miscibility of the terpolymer with polyphenylene oxide is improved greatly so that it can be dispersed into the matrix quite uniformly.

In addition to the above-mentioned effect, this invention has additional effects such as good weather resistance, only very slight coloration due to deterioriation at high temperature, good surface gloss and so on, so that the usefulness of this invention is very great.

Hereunder, the mode by which this invention is put into practice will be described in concrete terms.

The polyphenylene oxide of component (a) used in this invention is a polymer having a unit structure represented by the following general formula:

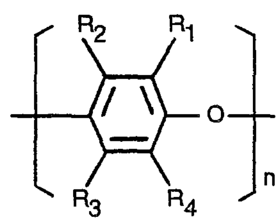

or a copolymer of two or more structural units of the above-mentioned formula used in amounts not practically lowering the fundamental performances of polyphenylene oxide such as heat resistance, mechanical properties and the like, wherein n is 50 or more. In the formula, $R_1$, $R_2$, $R_3$ and $R_4$ are hydrogen, halogen, a hydrocarbon group, substituted hydrocarbon group, hydrocarbon-oxy group or substituted

hydrocarbon-oxy group. As concrete examples of $R_1$, $R_2$, $R_3$ and $R_4$, there can be mentioned hydrogen; halogen atoms such as chlorine, bromine and iodine; hydrocarbon groups such as methyl, ethyl, propyl, isopropyl, butyl, tertiary butyl, allyl, phenyl, benzyl and methylbenzyl; substituted hydrocarbon groups such as chloromethyl and bromomethyl; and hydrocarbon-oxy and substituted hydrocarbon-oxy groups such as methoxy, ethoxy, phenoxy and chloroethoxy. Concrete examples of said polymer and copolymer include polymers such as poly-2,6-dimethyl-1,4-phenylene oxide, poly-2,6-diethyl-1,4-phenylene oxide, poly-2,6-dipropyl-1,4-phenylene oxide, poly-2-methyl-6-isopropyl-1,4-phenylene oxide, poly-2,6-dimethoxy-1,4-phenylene oxide, poly-2,6-diphenyl-1,4-phenylene oxide, poly-2,6-dichloro-1,4-phenylene oxide and poly-2,5-dimethyl-1,4-phenylene oxide; and copolymers such as a copolymer of 2,6-dimethylphenol and 2,3,6-trimethylphenol and a copolymer of 2,6-dimethylphenol and 3-methyl-6-t-butylphenol.

Further, the polyphenylene oxide of this invention also includes modified products of said polymer or copolymer. As examples of the modified products of said polymer or copolymer, there can be mentioned a product produced by oxidatively polymerizing a compound of the following formula:

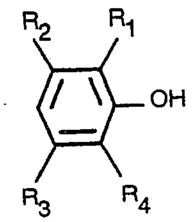

wherein $R_1$, $R_2$, $R_3$ and $R_4$ are as defined above, in the presence of ethylene-propylene-polyene terpolymer, a product produced by oxidatively polymerizing a compound of the following formula:

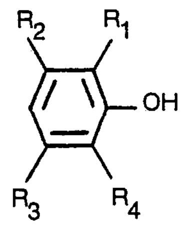

wherein $R_1$, $R_2$, $R_3$ and $R_4$ are as defined above, in the presence of polystyrene, a product produced by polymerizing styrene in the presence of a phenylene oxide polymer or copolymer and a product produced by kneading and reacting a phenylene oxide polymer or copolymer and styrene together with a peroxide in an extruder.

The component (b) used in this invention, i.e. the alkenyl aromatic polymer modified with diene rubber, is a product produced by dispersing diene rubber particles into a matrix of alkenyl aromatic polymer. Herein, the term "alkenyl aromatic polymer" means polymers and copolymers containing 50% by weight or more of an alkenyl aromatic monomer represented by the following general formula:

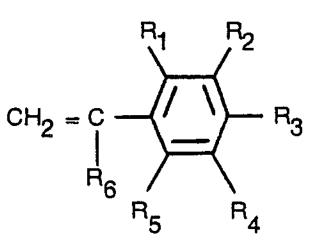

wherein $R_1$, $R_2$, $R_3$, $R_4$ and $R_5$ are hydrogen, halogen, a hydrocarbon group, substituted hydrocarbon group, hydrocarbon-oxy group or substituted hydrocarbon-oxy group, and $R_6$ is hydrogen or a lower alkyl group having 1—4 carbon atoms.

Concrete examples of $R_1$, $R_2$, $R_3$, $R_4$ and $R_5$ include hydrogen; halogen atoms such as chlorine, bromine and iodine; hydrocarbon groups such as methyl, ethyl, propyl, vinyl, allyl, benzyl and methylbenzyl; substituted hydrocarbon groups such as chloromethyl and bromomethyl; and hydrocarbon-oxy and substituted hydrocarbon-oxy groups such as methoxy, ethoxy, phenoxy and monochloromethoxy. Concrete examples of $R_6$ include hydrogen; and lower alkyl groups such as methyl and ethyl.

As examples of the alkenyl aromatic polymer there can be mentioned polystyrene, polychlorostyrene, poly-α-methylstyrene, styrene-acrylonitrile copolymer, styrene-α-methylstyrene copolymer, styrene-p-methylstyrene copolymer, styrene-maleic anhydride copolymer and styrene-methyl methacrylate copolymer, among which polystyrene is particularly preferable. The diene rubber to be dispersed into such

an alkenyl aromatic resin is a rubbery polymer containing a diene component such as butadiene, isoprene· and chlorobutadiene, and includes their homopolymers and their copolymers with various monomers. Concrete examples of said diene rubber include polybutadiene, polyisoprene, polychlorobutadiene, butadiene-styrene copolymer, isoprene-styrene copolymer, butadiene-acrylonitrile copolymer and copolymers of isobutylene and butadiene or isoprene. As the method for dispersing said diene type rubbery polymer into alkenyl aromatic polymer, there are known various methods any of which may be employed. For example, the mechanical blending method, solution blending method, etc. can be mentioned. Particularly, the method comprising dissolving the rubber into alkenyl aromatic monomer and then polymerizing it is often practised industrially and is useful because the product is readily available commercially. As concrete examples of such product, there can be mentioned the butadiene rubber modified polystyrene and the styrene-butadiene rubber modified polystyrene which are marketed under the name high impact polystyrene, as well as acrylonitrile-butadiene-styrene copolymer which is marketed under the name ABS resin.

In this invention, component (a) and component (b) are used in such a proportion that the ratio by weight of component (a) to component (b) falls in the range of 1/10 to 10/1.

If this ratio is less than 1/10, the excellent heat resistance and mechanical properties of polyphenylene oxide cannot be attained. If this ratio exceeds 10/1, the moldability deteriorates because of the smallness of the quantity of component (b). Particularly when the ratio is in the range of 2/3 to 3/2, mechanical properties and particularly impact strength reach their highest value and moldability is good, so that this range is preferable in the aforementioned range.

According to this invention, a copolymer produced by graft-polymerizing an alkenyl aromatic monomer onto ethylene-α-olefin-polyene terpolymer is added as component (c) to the above-mentioned components (a) and (b). Said α-olefin used as the second monomer of the ethylene-α-olefin-polyene terpolymer may be any compound as long as it is a hydrocarbon compound having 3—20 carbon atoms. As concrete examples of said α-olefin, propylene, 1-butene, 1-pentene, 1-hexene, 1-heptene, styrene, p-isopropylstyrene and vinylcyclohexane can be mentioned, among which propylene is particularly important.

As said polyene compound used as the third monomer of the ethylene-α-olefin-polyene terpolymer to be subjected to graft reaction with the alkenyl aromatic monomer in this invention, there can be used any compound such as 1,4-hexadiene, 1,6-octadiene, 2-methyl-1,5-hexadiene, 6-methyl-1,5-heptadiene, 7-methyl-1,6-octadiene, 11-ethyl-1,11-tridecadiene, 9-ethyl-1,9-undecadiene, isoprene, 1,4-pentadiene, 1,3-pentadiene, 1,4,9-decatriene, myrcene, 1-phenyl-1,3-butadiene, p-diallylbenzene, p-bromoallylbenzene, 4-vinyl-1-cyclohexene, 1,3,5-trivinylcyclohexane, trans-1,2-divinylcyclobutane, 1,5-cyclooctadiene, 1,3,5-cycloheptatriene, 1,5,9-cyclododecatriene, 1,4-cycloheptadiene, cyclopentadiene, 2,2'-dicyclopentenyl, 1,4-bis(cyclopenten-2-yl)-butane, 4,7,8,9-tetrahydroindene, 6-methyl-4,7,8,9-tetrahydroindene, bicyclo(3,3,0)-octadiene-2,6-dicyclopentadiene, 2-methyl-2,5-norbornadiene, 5-methylene-2-norbornene, 5-ethylidene-2-norbornene, 5-isopropylidene-2-norbornene, 5-isopropenyl-2-norbornene, 5-(2'-methyl-1'-propenyl)-2-norbornene, 5-(1',2'-dimethyl-1'-propenyl)-2-norbornene, 5-(2'-butenyl)-2-norbornene, 6-methyl-5-(2'-butenyl)-2-norbornene, 6-(3'-cyclohexenyl)-2-norbornene, tricyclopentadiene and 6-chloromethyl-5-isopropenyl-2-norbornene.

As the terpolymer used in this invention, it is preferable to use a terpolymer having such a well known composition that the content of ethylene is 40—90 mol%, the content of α-olefin is 10—60 mol% and the content of polyene compound is 0.3—20 mol% and particularly the content of ethylene is 60—85 mol%, the content of α-olefin is 15—35 mol% and the content of polyene compound is 1—5 mol%. Apart from above, it is also allowable to use a terpolymer in which the content of polyene compound is more than 20 mol%. It is also allowable to use terpolymers in which the contents of ethylene and α-olefin are outside the above-mentioned ranges.

Further, said terpolymer may be replaced by, for example, a chlorinated terpolymer, and its use is also included in the process of this invention.

The alkenyl aromatic monomer to be graft-copolymerized in this invention is represented by the following general formula:

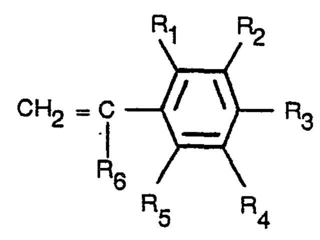

wherein $R_1$, $R_2$, $R_3$, $R_4$ and $R_5$ are any of hydrogen, halogen, a hydrocarbon group, substituted hydrocarbon group, hydrocarbon-oxy group and substituted hydrocarbon-oxy group, and $R_6$ is hydrogen or a lower alkyl group having 1—4 carbon atoms.

Concrete examples of $R_1$, $R_2$, $R_3$, $R_4$ and $R_5$ in the above-mentioned formula include hydrogen; halogen atoms such as chlorine, bromine and iodine; hydrocarbon groups such as methyl, ethyl, propyl, vinyl, allyl, benzyl and methylbenzyl; substituted hydrocarbon groups such as chloromethyl and bromomethyl; and

hydrocarbon-oxy and substituted hydrocarbon-oxy groups such as methoxy, ethoxy, phenoxy and monochloromethoxy.

Concrete examples of $R_6$ include hydrogen; lower alkyl groups such as methyl and ethyl.

Concrete examples of said alkenyl aromatic monomer include styrene, 2,4-dichlorostyrene, p-methoxystyrene, p-methylstyrene, p-phenylstyrene, p-divinylbenzene, p-(chloromethoxy)-styrene, α-methylstyrene, o-methyl-α-methylstyrene, m-methyl-α-methylstyrene, p-methyl-α-methylstyrene and p-methoxy-α-methylstyrene. They may be used either alone or in the form of a mixture of two or more.

As the method for graft-polymerizing alkenyl aromatic monomer onto ethylene-α-olefin-polyene terpolymer used in this invention, any of the well known polymerization methods such as the suspension polymerization method, emulsion polymerization method, solution polymerization method, bulk polymerization method (which includes not only the method using a polymerization tank but also the method using an extruder) and the like may be employed. In this case, the alkenyl aromatic monomer to be graft-polymerized onto ethylene-α-olefin-polyene terpolymer is used in an amount such that the ratio by weight of ethylene-α-olefin-polyene terpolymer to alkenyl aromatic monomer falls in the range of 1/20 to 20/1. If this ratio is less than 1/20 or exceeds 20/1, the effect brought about by the use of graft polymer is small as compared with the case of single use of the alkenyl aromatic polymer or the ethylene-α-olefin-polyene terpolymer. When this ratio falls in the range of 1/3 to 3/1, the graft copolymer is quite readily miscible and dispersible into polyphenylene oxide and the effect of improving impact resistance is quite great, which is desirable. Particularly, in this invention, this component (c) is added in an amount of 1—100 parts by weight per 100 parts by weight of the sum of components (a) and (b). If this amount is less than 1 part by weight, the effect of this invention for improving heat resistance and impact resistance cannot be attained practically. Addition of an amount more than 100 parts by weight is undesirable because it weakens the excellent properties which polyphenylene oxide originally has. Addition of component (c) in an amount of 5—50 parts by weight is particularly preferable because optimum effect can be achieved under such a condition.

In this invention, in addition to the above-mentioned components, conventionally employed additives such as heat stabilizers, flame retardants, pigments, fillers, plasticizers, lubricants, ultraviolet absorbers, etc. may be added as long as they do not affect the properties greatly. Further, it is also allowable to add fibrous reinforcing materials such as glass fiber, asbestos fiber, carbon fiber, alumina fiber and the like.

As the method for mixing these components (a), (b), (c) and the optionally employed various additives in this invention, any method selected from mechanical mixing methods using a mixing machine typified by the roll mill, Banbury mixer, extruder, kneader, etc. or the methods of mixing them in the state of solution or suspension can be utilized.

Next, this invention will be explained with reference to concrete examples which are presented in no limitative way but only in an illustrative way.

## Preparation Example A

Preparation of Graft Copolymer

40 g of an ethylene-propylene-ethylidenenorbornene terpolymer (manufactured by Sumitomo Chemical Company Ltd., ESPRENE® 505), which had been pulverized into granules having a size of less than 5 mm cube, and 200 g of water were charged into a 500 cc glass autoclave, to which were successively added with stirring a solution of 0.2 g of benzoyl peroxide in 40 g of styrene and a solution of 1.2 g of polyvinyl alcohol (manufactured by Nippon Gosei Kagaku Kogyo K.K., Gōsenōl® GL—05) in 40 g of water as a dispersion stabilizer. The mixture was continuously stirred for one hour as it was to impregnate the granules of ethylene-propylene-ethylidenenorbornene terpolymer with styrene. Then it was reacted at 90°C for 6 hours and thereafter at 115°C for 2 hours. After completion of the reaction, the product was collected by filtration, washed with water and vacuum-dried to obtain 77.0 g of graft copolymer pellet.

## Preparation Example B

Preparation of Graft Copolymer

20 g of the same ethylene-propylene-ethylidenenorbornene terpolymer as used in Preparation Example A and 140 g of water were charged into a 500 cc glass autoclave, to which were successively added with stirring a solution of 0.2 g of benzoyl peroxide in 40 g of styrene and a solution of 0.9 g of the same polyvinyl alcohol as used in Preparation Example A in 40 g of water as a dispersion stabilizer. Impregnation and reaction were carried out under the same conditions as in Preparation Example A. After completion of the reaction, the product was collected by filtration, washed with water and vacuum-dried to obtain 55.5 g of graft copolymer pellet.

The analyses of the graft copolymers obtained in Preparation Examples A and B are shown in Table 1.

TABLE 1

| No. of Preparation Example | Content of polystyrene part (%) | Degree of grafting 1) (%) | $\eta_{sp/c}$ (dl/g) 2) |
|---|---|---|---|
| A | 48 | 67 | 0.73 |
| B | 64 | 21 | 0.71 |

1) Measured by extracting homopolystyrene with methyl ethyl ketone;

$$\text{Degree of grafting} = \frac{\text{Total amount of polystyrene} - \text{Amount of homopolystyrene}}{\text{Total amount of polystyrene}}$$

2) Reduced viscosity of the homopolystyrene part extracted with methyl ethyl ketone, measured in chloroform solvent at a temperature of 25°C at a concentration of 0.5 g/dl.

Example 1 and Comparative Examples 1—3

A mixture of 50 parts of polyphenylene oxide produced by oxidative polymerization of 2,6-dimethylphenol and having a reduced viscosity of 0.59 as measured in chloroform at a concentration of 0.5 g/dl at a temperature of 25°C, 39.1 parts of high impact polystyrene (manufactured by Nippon Polystyrene K.K., ESBRITE® 500 AS), 10.9 parts of the graft copolymer of Preparative Example A, 6 parts of triphenyl phosphate and 0.5 parts of Sumilizer® MDP (2,2'-methylene bis(6-tert.-butyl-4-methyl phenol) as a stabilizer was kneaded using a Brabender Plastograph at 250°C for 10 minutes. It was press molded at 250°C or at 290°C, and Izod impact strengths of the molded products were measured to obtain results of 2.75 J/$cm^2$ (28 kg·cm/cm) and 2.65 J/$cm^2$ (27 kg·cm/cm), respectively. Their heat distortion temperature was also measured to obtain a result of 101°C. For comparison, a composition not containing the graft copolymer (Comparative Example 1), a composition prepared by simply blending polystyrene with ethylene-propylene-ethylidenenorbornene terpolymer in place of the graft copolymer (Comparative Example 2) and a composition prepared by simply blending polystyrene with styrene-butadiene rubber in place of the graft copolymer (Comparative Example 3) were similarly kneaded and molded, and Izod impact strengths of the molded products were measured to obtain the results shown in Table 2. As is apparent from the table, the composition of Example 1 which contained the copolymer of this invention produced by graft-polymerizing styrene onto ethylene-propylene-ethylidenenorbornene terpolymer was greatly improved in impact resistance without any substantial drop in impact resistance at high temperature, as compared with the composition of Comparative Example 1 not containing said copolymer. Conversely, the composition prepared by simply blending polystyrene with ethylene-propylene-ethylidenenorbornene was much less improved in impact resistance. In the case of the composition prepared by using styrene-butadiene rubber, the drop in impact resistance was marked at high temperatures due to thermal deterioration, though an improvement in impact resistance was observable at low temperatures.

TABLE 2

| No. of Example | Polyphenylene oxide | ESBRITE® 500 AS | Graft copolymer | ESBRITE® #4 2) | ESPRENE® 505 | SOLPRENE® 1204 3) | Triphenyl phosphate | SUMILIZER® MDP | Izod impact strength 4) | |
|---|---|---|---|---|---|---|---|---|---|---|
| | | | | | | | | | Molded at 250°C | Molded at 290°C |
| Example 1 | 50 | 39.1 | 10.9 1) | – | – | – | 6 | 0.5 | 2.75 | 2.65 |
| Comparative Example 1 | 50 | 50 | – | – | – | – | 6 | 0.5 | 0.83 | 0.50 |
| ,, 2 | 50 | 39.1 | – | 5.2 | 5.7 | – | 6 | 0.5 | 1.37 | 1.18 |
| ,, 3 | 50 | 39.1 | – | 5.2 | – | 5.7 | 6 | 0.5 | 1.77 | 1.08 |

1) Ethylene-propylene-ethylidenenorbornene terpolymer part 5.7, polystyrene part 5.2.

2) Polystyrene, manufactured by Nippon Polystyrene Company Ltd.

3) Styrene-butadiene copolymer rubber, manufactured by Showa Denko K.K.

4) Measured according to JIS K 7110; unit g/$cm^2$ (notched).

Examples 2—5

The same polyphenylene oxide and high impact polystyrene as used in Example 1, the graft copolymer of Preparation Example A, triphenyl phosphate and Sumilizer® MDP were kneaded in the blending ratios shown in Table 3 by means of a Brabender Plastograph at 250°C for 10 minutes. The kneaded mixtures were press molded at 250°C or at 290°C, and Izod impact strengths of the molded products were measured. As is apparent from table 3, the effect of improving impact resistance increased as the amount of the graft copolymer added increased. Particularly in the compositions of Example 4 and thereafter in which the amount of graft copolymer added exceeded 5% by weight based on the sum of polyphenylene oxide and high impact polystyrene, the impact resistance improved rapidly. In all the compositions, the drop in impact resistance at high temperatures was very small and the heat resistance was good.

TABLE 3

| No. of Example | Polyphenylene oxide | ESBRITE® 500 AS | Graft copolymer | Triphenyl phosphate | SUMILIZER® MDP | Izod impact strength ($g/cm^2$) | |
|---|---|---|---|---|---|---|---|
| | | | | | | Molded at 250°C | Molded at 290°C |
| Comparative Example 1 | 50 | 50 | – | 6 | 0.5 | 0.83 | 0.50 |
| Example 2 | 50 | 48.1 | 1.9 | 6 | 0.5 | 1.08 | 0.88 |
| ,, 3 | 50 | 46.2 | 3.8 | 6 | 0.5 | 1.37 | 1.18 |
| ,, 4 | 50 | 44.2 | 5.8 | 6 | 0.5 | 2.06 | 1.67 |
| ,, 1 | 50 | 39.1 | 10.9 | 6 | 0.5 | 2.75 | 2.65 |
| ,, 5 | 50 | 34.8 | 15.2 | 6 | 0.5 | 3.24 | 2.94 |

Examples 6—7

The same polyphenylene oxide and high impact polystyrene as used in Example 1, the graft copolymer of Preparation Example A, triphenyl phosphate and Sumilizer® MDP were kneaded at the blending ratios shown in Table 4 using a Brabender Plastograph at 250°C for 10 minutes. The kneaded mixtures were press molded at 250°C or at 290°C, and Izod impact strengths of the molded products were measured. In all cases, a great improvement in the impact resistance was observed, and the drop in impact resistance at high temperatures was small.

TABLE 4

| No. of Example | Polyphenylene oxide | ESBRITE® 500 AS | Graft copolymer | Triphenyl phosphate | SUMILIZER® MDP | Izod impact strength ( g /cm$^2$) | |
|---|---|---|---|---|---|---|---|
| | | | | | | Molded at 250°C | Molded at 290°C |
| Example 6 | 40 | 50.4 | 9.6 | 6 | 0.5 | 2.26 | 1.36 |
| ,, 7 | 40 | 46.1 | 13.9 | 6 | 0.5 | 2.34 | 2.65 |

Example 8 and Comparative Example 4

A mixture of 50 parts of polyphenylene oxide having a reduced viscosity of 0.60 in chloroform at a concentration of 0.5 g/dl at a temperature of 25°C which had been produced by oxidative polymerization of 2,6-dimethylphenol-3-methyl-6-t-butylphenol in a molar ratio of 96/4, 39.1 parts of high impact polystyrene (manufactured by Nippon Polystyrene K.K., ESBRITE® 500 A), 39.1 parts of the graft copolymer of Preparation Example A and 0.5 part of Sumilizer® MDP as a stabilizer was kneaded and granulated by means of twin-screw extruder at 260°C. The granule was injection molded at 260°C or at 300°C, and Izod impact strengths of the molded products were measured. For comparison, a composition prepared by simply blending polystyrene with ethylene-propylene-ethylidenenorbornene terpolymer in place of the graft copolymer was similarly kneaded and molded, and the Izod impact strength was measured. The results are shown in Table 5. As is apparent from this table, the composition of Example 8 was greatly improved in impact resistance as compared with the composition of Comparative Example 4, and showed only a very small drop in impact resistance at high temperature. Heat distortion temperature of the composition of Example 8 was also measured to obtain a result of 125°C.

TABLE 5

| No. of Example | Polyphenylene oxide | ESBRITE® 500 A | Graft copolymer | ESBRITE® | ESPRENE® 505 | SUMILIZER® MDP | Izod impact strength ($g/cm^2$) | |
|---|---|---|---|---|---|---|---|---|
| | | | | | | | Molded at 260°C | Molded at 300°C |
| Example 8 | 50 | 39.1 | 10.9 [1)] | – | – | 0.5 | 1.86 | 1.67 |
| Comparative Example 4 | 50 | 39.1 | – | 5.2 | 5.7 | 0.5 | 0.83 | 0.65 |

1) Ethylene-propylene-ethylidenenorbornene terpolymer part 5.7, polystyrene part 5.2.

Example 9

A mixture of 50 parts of the same polyphenylene oxide as mentioned in Example 8, 33.3 parts of high impact polystyrene (manufactured by Nippon Polystyrene K.K., ESBRITE® 500 A), 16.7 parts of the copolymer of Preparation Example B which had been obtained by graft polymerizing styrene onto ethylene-propylene-ethylidenenorbornene terpolymer (manufactured by Sumitomo Chemical Company Ltd., ESPRENE® 505) and 0.5 part of Sumilizer® MDP as a stabilizer was kneaded using a Brabender Plastograph at 250°C for 10 minutes. The kneaded mixture was press molded at 250°C or at 290°C, and Izod impact strengths of the molded products were measured. Thus, the impact strengths were so high as 1.86 J/cm² (19 kg·cm/cm) in the sample molded at 250°C and 1.77 J/cm² (18 kg·cm/cm) in the sample molded at 290°C. The drop in impact strength due to the deterioration at high temperature was very small.

Example 10 and Comparative Example 5

The same polyphenylene oxide and high impact polystyrene as in Example 1 and the graft copolymer of Preparation Example A were kneaded and granulated in the blending ratios shown in Table 6 by means of a twin-screw extruder, after which the granules were press molded into a thickness of 0.2 mm to obtain specimens having a width of about 10 mm. The specimen was folded to an angle of 270° by applying a tension of 1 kp thereto, and the number of foldings required for breakage was measured. By the addition of the graft copolymer, the number of foldings was greatly improved.

TABLE 6

| No. of Example | Polyphenylene oxide | ESBRITE® 500 AS | Graft copolymer | Number of foldings |
|---|---|---|---|---|
| Example 10 | 50 | 39 | 11 | 2,674 |
| Comparative Example 5 | 50 | 50 | – | 725 |

**Claims**

1. A polyphenylene oxide composition comprising (a) a polyphenylene oxide which is a polymer having a unit structure represented by the following general formula:

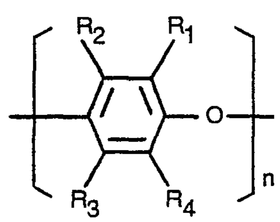

or a copolymer of two or more structural units represented by the above-mentioned formula, wherein n is a number of 50 or greater, and $R_1$, $R_2$, $R_3$ and $R_4$ are hydrogen, halogen, hydrocarbon group, substituted hydrocarbon group, hydrocarbon-oxy group or substituted hydrocarbon-oxy group, (b) an alkenyl aromatic polymer modified with a diene rubber wherein said alkenyl aromatic polymer is a polymer or a copolymer containing 50% by weight or more of alkenyl aromatic monomer represented by the following general formula:

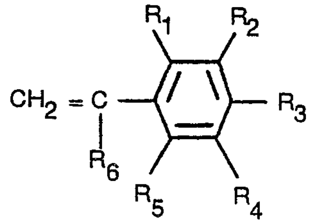

wherein $R_1$, $R_2$, $R_3$, $R_4$ and $R_5$ are hydrogen, halogen, hydrocarbon group, substituted hydrocarbon group, hydrocarbon-oxy group or substituted hydrocarbon-oxy group, and $R_6$ is hydrogen or lower alkyl group

having 1—4 carbon atoms, and (c) a copolymer produced by graft copolymerizing an alkenyl aromatic monomer onto an ethylene-α-olefin-polyene terpolymer in which the α-olefin used as the second monomer of the ethylene-α-olefin-polyene terpolymer is a hydrocarbon compound having 3 to 20 carbon atoms in which the ratio by weight of the ethylene-α-olefin-polyene terpolymer part to the part of the polymer of alkenyl aromatic monomer is in the range of 1/20 to 20/1, the ratio by weight of the component (a) to component (b) being in the range of 1/10 to 10/1, and the amount of the component (c) being 1 to 100 parts by weight per 100 parts by weight of the sum of the component (a) and component (b).

2. A composition according to Claim 1, wherein the polyphenylene oxide of component (a) is poly-2,6-dimethyl-1,4-phenylene oxide, poly-2,6-diethyl-1,4-phenylene oxide, poly-2,6-dipropyl-1,4-phenylene oxide, poly-2-methyl-6-isopropyl-1,4-phenylene oxide, poly-2,6-dimethoxy-1,4-phenylene oxide, poly-2,6-diphenyl-1,4-phenylene oxide, poly-2,6-dichloro-1,4-phenylene oxide, poly-2,5-dimethyl-1,4-phenylene oxide, copolymer of 2,6-dimethylphenol and 2,3,6-trimethylphenol, copolymer of 2,6-dimethylphenol and 3-methyl-6-t-butylphenol, modified product obtained by oxidatively polymerizing a compound of the following formula:

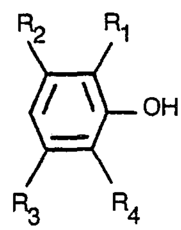

wherein $R_1$, $R_2$, $R_3$ and $R_4$ are as defined above, in the presence of ethylene-propylene-polyene terpolymer, modified product obtained by oxidatively polymerizing a compound of the following formula:

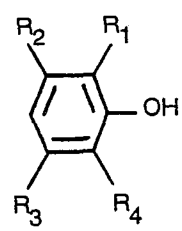

wherein $R_1$, $R_2$, $R_3$ and $R_4$ are as defined above, in the presence of polystyrene, modified product obtained by polymerizing styrene in the presence of polyphenylene oxide polymer or copolymer or modified product obtained by kneading and reacting polyphenylene oxide polymer or copolymer and styrene together with a peroxide in an extruder.

3. A composition according to Claim 1, wherein said alkenyl aromatic polymer is polystyrene, polychlorostyrene, poly-α-methylstyrene, styrene-acrylonitrile copolymer, styrene-α-methylstyrene copolymer, styrene-p-methylstyrene copolymer, styrene-maleic anhydride copolymer or styrene-methyl methacrylate copolymer.

4. A composition according to Claim 3, wherein said alkenyl aromatic polymer is polystyrene.

5. A composition according to Claim 1, wherein said diene rubber is polybutadiene, polyisoprene, polychlorobutadiene, butadiene-styrene copolymer, isoprene-styrene copolymer, butadiene-acrylonitrile copolymer or a copolymer of isobutylene and butylene or isoprene.

6. A composition according to Claim 1, wherein the ratio by weight of component (a) to component (b) is 2/3—3/2.

7. A composition according to Claim 1, wherein the α-olefin in the ethylene-α-olefin-polyene terpolymer is propylene, 1-butene, 1-pentene, 1-hexene, 1-heptene, styrene, p-isopropylstyrene or vinylcyclohexane.

8. A composition according to Claim 1, wherein the polyene in the ethylene-α-olefin-polyene terpolymer is 1,4-hexadiene, 1,6-octadiene, 2-methyl-1,5-hexadiene, 6-methyl-1,5-heptadiene, 7-methyl-1,6-octadiene, 11-ethyl-1,11-tridecadiene, 9-ethyl-1,9-undecadiene, isoprene, 1,4-pentadiene, 1,3-pentadiene, 1,4,9-decatriene, myrcene, 1-phenyl-1,3-butadiene, p-diallylbenzene, p-bromoallylbenzene, 4-vinyl-1-cyclohexane, 1,3,5-trivinylcyclohexane, trans-1,2-divinylcyclobutane, 1,5-cyclooctadiene, 1,3,5-cycloheptatriene, 1,5,9-cyclododecatriene, 1,4-cycloheptadiene, cyclopentadiene, 2,2′-dicyclopentenyl, 1,4-bis-(cyclopenten-2-yl)-butane, 4,7,8,9-tetrahydroindene, 6-methyl-4,7,8,9-tetrahydroindene, bicyclo(3,3,0)-octadiene-2,6, dicyclopentadiene, 2-methyl-2,5-norbornadiene, 5-methylene-2-norbornene, 5-ethylidene-2-norbornene, 5-isopropylidene-2-norbornene, 5-isopropenyl-2-norbornene, 5-(2′-methyl-1′-propenyl)-2-norbornene, 5-(1′,2′-dimethyl-1′-propenyl)-2-norbornene, 5-(2′-butenyl)-2-norbornene, 6-methyl-5-(2′-butenyl)-2-norbornene, 6-(3′-cyclohexenyl)-2-norbornene, tricyclopentadiene or 6-chloromethyl-5-isopropenyl-2-norbornene.

9. A composition according to Claim 1, wherein the contents of ethylene, α-olefin and polyene in said terpolymer are 40—90 mol%, 10—60 mol% and 0.3—20 mol%, respectively.

10. A composition according to Claim 1, wherein said alkenyl aromatic monomer to be graft polymerized onto the terpolymer is represented by the following general formula:

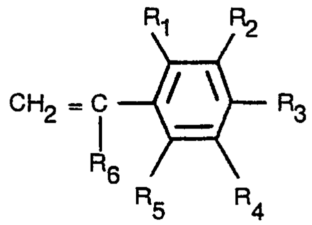

wherein $R_1$, $R_2$, $R_3$, $R_4$ and $R_5$ are hydrogen, halogen, hydrocarbon group, substituted hydrocarbon group, hydrocarbon-oxy group or substituted hydrocarbon-oxy group, and $R_6$ is hydrogen or lower alkyl group having 1—4 carbon atoms.

11. A composition according to Claim 10, wherein said alkenyl aromatic monomer is at least one member selected from the group consisting of styrene, 2,4-dichlorostyrene, p-methoxystyrene, p-methylstyrene, p-phenylstyrene, p-divinylbenzene, p-(chloromethoxy)styrene, α-methylstyrene, o-methyl-α-methylstyrene, m-methyl-α-methylstyrene, p-methyl-α-methylstyrene and p-methoxy-α-methylstyrene.

12. A composition according to Claim 1, wherein in the graft copolymer of component (c), the ratio by weight of ethylene-α-olefin-polyene terpolymer part to the part of the polymer of alkenyl aromatic monomer is 1/3—3/1.

13. A composition according to Claim 1, wherein the amount of component (c) is 5—50 parts by weight per 100 parts by weight of the sum of component (a) and component (b).

**Patentansprüche**

1. Polyphenylenoxid-Zusammensetzung, enthaltend a) ein Polyphenylenoxid, das entweder ein Polymer mit einer Struktureinheit gemäß der folgenden allgemeinen Formel ist:

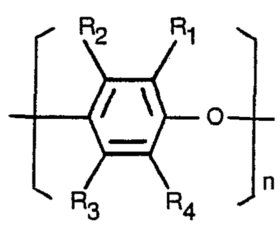

oder ein Copolymer aus zwei oder mehr Struktureinheiten gemäß der vorstehend erwähnten Formel, in der n eine Zahl mit dem Wert 50 oder größer ist und $R_1$, $R_2$, $R_3$ und $R_4$ Wasserstoffatome, Halogenatome, Kohlenwasserstoffreste, substituierte Kohlenwasserstoffreste, Kohlenwasserstoffoxyreste oder substituierte Kohlenwasserstoffoxyreste bedeuten, b) ein aromatisches Alkenyl-Polymer, modifiziert mit einem Dien-Kautschuk, wobei das aromatische Alkenyl-Polymer ein Polymer oder Copolymer ist, das 50 Gewichtsprozent oder mehr eines aromatischen Alkenyl-Monomeren gemäß der folgenden allgemeinen Formel enthält:

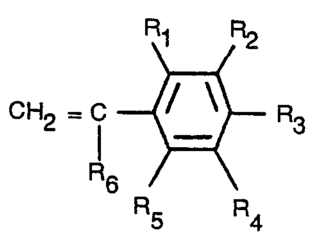

in der $R_1$, $R_2$, $R_3$, $R_4$ und $R_5$ Wasserstoffatome, Halogenatome, Kohlenwasserstoffreste, substituierte Kohlenwasserstoffreste, Kohlenwasserstoffoxyreste oder substituierte Kohlenwasserstoffoxyreste bedeuten und $R_6$ ein Wasserstoffatom oder ein Niederalkylrest mit 1 bis 4 Kohlenstoffatomen ist, und c) ein Copolymer, das durch Pfropfcopolymerisation eines aromatischen Alkenyl-Monomeren auf ein Äthylen-α-Olefin-Polyen-Terpolymer hergestellt wird, in dem das als zweites Monomer verwendete α-Olefin des Äthylen-α-Olefin-Polyen-Terpolymeren eine Kohlenwasserstoff-Verbindung mit 3 bis 30 Kohlenstoffatomen ist und in dem das Gewichtsverhältnis des Äthylen-α-Olefin-Polyen-Terpolymer-Anteils zum Polymer-Anteil des aromatischen Alkenyl-Monomeren im Bereich von 1/20 zu 20/1 liegt, wobei das Gewichtsverhältnis des Komponente (a) zur Komponente (b) im Bereich von 1/10 zu 10/1 liegt und die Menge der Komponente (c) 1 bis 100 Gewichtsteile pro 100 Gewichtsteile der Summe aus Komponente (a) und Komponente (b) ausmacht.

2. Zusammensetzung nach Anspruch 1, in der das Polyphenylenoxid der Komponente (a) Poly-2,6-dimethyl-1,4-phenylenoxid, Poly-2,6-diäthyl-1,4-phenylenoxid, Poly-2,6-dipropyl-1,4-phenylenoxid, Poly-2-methyl-6-isopropyl-1,4-phenylenoxid, Poly-2,6-dimethoxy-1,4-phenylenoxid, Poly-2,6-diphenyl-1,4-phenylenoxid, Poly-2,6-dichloro-1,4-phenylenoxid, Poly-2,5-dimethyl-1,4-phenylenoxid, ein Copolymer aus 2,6-Dimethylphenol und 2,3,6-Trimethylphenol, ein Copolymer aus 2,6-Dimethylphenol und 3-Methyl-6-tert.-butylphenol, ein modifiziertes Produkt, das durch oxidative Polymerisation einer Verbindung der allgemeinen Formel

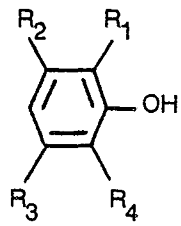

in der $R_1$, $R_2$, $R_3$ und $R_4$ die vorstehend angegebene Bedeutung haben, in Gegenwart eines Äthylen-Propylen-Polyen-Terpolymeren erhalten wird, ein modifiziertes Produkt, das durch oxidative Polymerisation einer Verbindung der folgenden allgemeinen Formel:

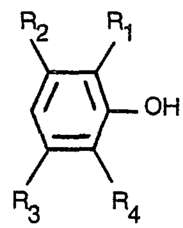

in der $R_1$, $R_2$, $R_3$ und $R_4$ die vorstehend angegebenen Bedeutungen haben, in Gegenwart von Polystyrol erhalten wird, ein modifiziertes Produkt, das durch Polymerisation von Styrol in Gegenwart eines Polyphenylenoxid-Polymeren oder -Copolymeren erhalten wird, oder ein modifiziertes Produkt ist, das durch Kneten und Umsetzung eines Polyphenylenoxid-Polymeren oder -Copolymeren und Styrol mit einem Peroxid in einem Extruder erhalten wird.

3. Zusammensetzung nach Anspruch 1, in der das aromatische Alkenyl-Polymer Polystyrol, Polychlorstyrol, Poly-α-methylstyrol, ein Styrol-Acrylnitril-Copolymer, ein Styrol-α-Methylstyrol-Copolymer, ein Styrol-p-Methylstyrol-Copolymer, ein Styrol-Maleinsäureanhydrid-Copolymer oder ein Styrol-Methylmethacrylat-Copolymer ist.

4. Zusammensetzung nach Anspruch 3, in der das aromatische Alkenyl-Polymer Polystyrol ist.

5. Zusammensetzung nach Anspruch 1, in der der Dien-Kautschuk Polybutadien, Polyisopren, Polychlorbutadien, ein Butadien-Styrol-Copolymer, ein Isopren-Styrol-Copolymer, ein Butadien-Acrylnitril-Copolymer oder ein Copolymer aus Isobutylen und Butadien oder Isopren ist.

6. Zusammensetzung nach Anspruch 1, in der das Gewichtsverhältnis von Komponente (a) zu Komponente (b) 2/3 bis 3/2 ist.

7. Zusammensetzung nach Anspruch 1, in der das α-Olefin in dem Äthylen-α-Olefin-Polyen-Terpolymeren Propylen, 1-Buten, 1-Penten, 1-Hexen, 1-Hepten, Styrol, p-Isopropylstyrol oder Vinylcyclohexan ist.

8. Zusammensetzung nach Anspruch 1, in der das Polyen im Äthylen-α-Olefin-Polyen-Terpolymeren 1,4-Hexadien, 1,6-Octadien, 2-Methyl-1,5-hexadien, 6-Methyl-1,5-heptadien, 7-Methyl-1,6-octadien, 11-Äthyl-1,11-tridecadien, 9-Äthyl-1,9-undecadien, Isopren, 1,4-Pentadien, 1,3-Pentadien, 1,4,9-Decatrien, Myrcen, 1-Phenyl-1,3-butadien, p-Diallylbenzol, p-Bromallylbenzol, 4-Vinyl-1-cyclohexen, 1,3,5-Trivinylcyclohexan, trans-1,2-Divinylcyclobutan, 1,5-Cyclooctadien, 1,3,5-Cycloheptatrien, 1,5,9-Cyclododecatrien, 1,4-Cycloheptadien, Cyclopentadien, 2,2'-Dicyclopentenyl, 1,4-bis(Cyclopenten-2-yl)-butan, 4,7,8,9-Tetrahydroinden, 6-Methyl-4,7,8,9-tetrahydroinden, Bicyclo[3,3,0]-octadien-2,6, Dicyclopentadien, 2-Methyl-2,5-norbornadien, 5-Methylen-2-norbornen, 5-Äthyliden-2-norbornen, 5-Isopropyliden-2-norbornen, 5-Isopropenyl-2-norbornen, 5-(2'-Methyl-1'-propenyl)-2-norbornen, 5-(1',2'-Dimethyl-1'-propenyl)-2-norbornen, 5-(2'-Butenyl)-2-norbornen, 6-Methyl-5-(2'-butenyl)-2-norbornen, 6-(3'-Cyclohexenyl)-2-norbornen, Tricyclopentadien oder 6-Chloromethyl-5-isopropenyl-2-norbornen ist.

9. Zusammensetzung nach Anspruch 1, in der die Anteile an Äthylen, α-Olefin und Polyen in dem Terpolymeren jeweils 40 bis 90 Molprozent, 10 bis 60 Molprozent und 0,3 bis 20 Molprozent ausmachen.

10. Zusammensetzung nach Anspruch 1, in der das aromatische Alkenyl-Monomere, das auf das Terpolymer pfropfpolymerisiert wird, die folgende allgemeine Formel aufweist:

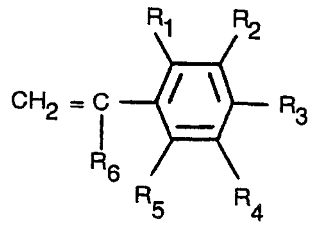

in der $R_1$, $R_2$, $R_3$, $R_4$ und $R_5$ Wasserstoffatome, Halogenatome, Kohlenwasserstoffreste, substituierte Kohlenwasserstoffreste, Kohlenwasserstoffoxyreste oder substituierte Kohlenwasserstoffoxyreste sind und $R_6$ ein Wasserstoffatom oder einen Niederalkylrest mit 1 bis 4 Kohlenstoffatomen bedeutet.

11. Zusammensetzung nach Anspruch 10, in der das aromatische Alkenyl-Monomer mindestens eine Verbindung aus der Gruppe Styrol, 2,4-Dichlorstyrol, p-Methoxystyrol, p-Methylstyrol, p-Phenylstyrol, p-Divinylbenzol, p-(Chlormethoxy)-styrol, α-Methylstyrol, o-Methyl-α-methylstyrol, m-Methyl-α-methylstyrol, p-Methyl-α-methylstyrol und p-Methoxy-α-methylstyrol ist.

12. Zusammensetzung nach Anspruch 1, in der im Pfropfcopolymeren der Komponente (c) das Gewichtsverhältnis vom Äthylen-α-Olefin-Polyen-Terpolymer-Anteil zum Polymer-Anteil des aromatischen Alkenyl-Monomeren 1/3 bis 3/1 ist.

13. Zusammensetzung nach Anspruch 1, in der die Menge an Komponente (c) 5 bis 50 Gewichtsteile pro 100 Gewichtsteile der Summe aus Komponente (a) und Komponente (b) ausmacht.

**Revendications**

1. Composition de poly(oxyde de phénylène) comprenant (a) un poly(oxyde de phénylène) qui est un polymère ayant un motif structural représenté par la formule générale suivante

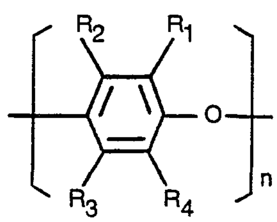

ou un copolymère de deux motifs structuraux ou plus représentés par la formule précédente, où n est un nombre égal à 50 ou plus et $R_1$, $R_2$, $R_3$ et $R_4$ sont des atomes d'hydrogène ou d'halogène ou des groupements hydrocarbonés, hydrocarbonés substitués, hydrocarbyloxy ou hydrocarbyloxy substitué, (b) un polymère aromatique alcénylique modifié par un caoutchouc diénique dans lequel ledit polymère aromatique alcénylique est un polymère ou un copolymère contenant 50% en poids ou plus de monomère aromatique alcénylique représenté par la formule générale suivante

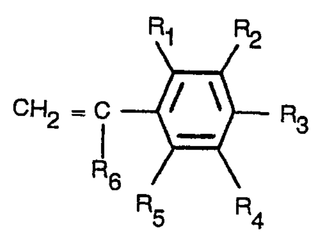

où $R_1$, $R_2$, $R_3$, $R_4$ et $R_5$ sont des atomes d'hydrogène ou d'halogène ou des groupements hydrocarbonés, hydrocarbonés substitués, hydrocarbyloxy ou hydrocarbyloxy substitués, et $R_6$ est un atome d'hydrogène ou un groupement alkyle inférieur ayant de 1 à 4 atomes de carbone, et (c) un copolymère produit par copolymérisation par greffage d'un monomère aromatique alcénylique sur un terpolymère éthylène/α-oléfine/polyène dans lequel l'α-oléfine utilisée comme second polymère du terpolymère éthylène/α-oléfine/polyène est un hydrocarbure ayant de 3 à 20 atomes de carbone, où le rapport pondéral de la partie terpolymère éthylène/α-oléfine/polyène à la partie polymère du monomère aromatique alcénylique est compris entre 1/20 et 20/1, le rapport pondéral du composant (a) au composant (b) étant compris entre 1/10 et 10/1, et la quantité de composant (c) étant de 1 à 100 parties en poids pour 100 parties en poids de la somme du composant (a) et du composant (b).

2. Composition selon la revendication 1, dans laquelle le poly(oxyde de phénylène) du composant (a) est le poly(oxyde de 2,6-diméthyl-1,4-phénylène), le poly(oxyde de 2,6-diéthyl-1,4-phénylène), le poly-(oxyde de 2,6-dipropyl-1,4-phénylène), le poly(oxyde de 2-méthyl-6-isopropyl-1,4-phénylène), le poly-(oxyde de 2,6-diméthoxy-1,4-phénylène), le poly(oxyde de 2,6-diphényl-1,4-phénylène), le poly(oxyde de 2,6-dichloro-1,4-phénylène), le poly(oxyde de 2,5-diméthyl-1,4-phénylène), un copolymère de 2,6-diméthylphénol et de 2,3,6-triméthylphénol, un copolymère de 2,6-diméthylphénol et de 3-méthyl-6-t-butylphénol, un produit modifié obtenu par polymérisation oxydante d'un composé ayant la formule suivante par polymérisation oxydante d'un composé ayant la formule suivante

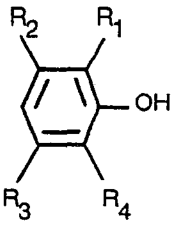

où $R_1$, $R_2$, $R_3$ et $R_4$ sont tels que définis précédemment, en présence d'un terpolymère éthylène/propylène/polyène, un produit modifié obtenu par polymérisation oxydante d'un composé ayant la formule suivante

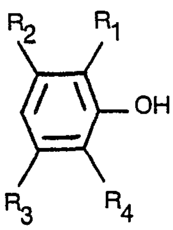

où $R_1$, $R_2$, $R_3$ et $R_4$ sont tels que définis précédemment, en présence de polystyrène, un produit modifié obtenu par polymérisation du styrène en présence d'un polymère ou copolymère de poly(oxyde de phénylène), ou un produit modifié obtenu en pétrissant et en faisant réagir un polymère ou copolymère de poly(oxyde de phénylène) avec du styrène ainsi qu'un peroxyde dans une extrudeuse.

3. Composition selon la revendication 1, dans laquelle ledit polymère aromatique alcénylique est le polystyrène, le polychlorostyrène, le poly-α-méthylstyrène, un copolymère styrène-acrylonitrile, un copolymère styrène-α-méthylstyrène, un copolymère styrène-p-méthylstyrène, un copolymère styrène-anhydride maléïque ou un copolymère styrène-méthacrylate de méthyle.

4. Composition selon la revendication 3, dans laquelle ledit polymère aromatique alcénylique est le polystyrène.

5. Composition selon la revendication 1, dans laquelle ledit caoutchouc diénique est le polybutadiène, le polyisoprène, le polychlorobutadiène, un copolymère butadiène-styrène, un copolymère isoprène-styrène, un copolymère butadiène-acrylonitrile ou un copolymère d'isobutylène et de butadiène ou d'isoprène.

6. Composition selon la revendication 1, dans laquelle le rapport pondéral du composant (a) au composant (b) est 2/3 à 3/2.

7. Composition selon la revendication 1, dans laquelle l'α-oléfine dans le terpolymère éthylène/α-oléfine/polyène est le propylène, le 1-butène, le 1-pentène, le 1-hexène, le 1-heptène, le styrène, le p-isopropylstyrène ou le vinylcyclohexane.

8. Composition selon la revendication 1, dans laquelle le polyène dans le terpolymère éthylène/α-oléfine/polyène est le 1,4-hexadiène, le 1,6-octadiène, le 2-méthyl-1,5-hexadiène, le 6-méthyl-1,5-heptadiène, le 7-méthyl-1,6-octadiène, le 11-éthyl-1,11-tridécadiène, le 9-éthyl-1,9-undécadiène, l'isoprène, le 1,4-pentadiène, le 1,3-pentadiène, le 1,4,9-décatriène, le myrcène, le 1-phényl-1,3-butadiène, le p-diallylbenzène, le p-bromoallylbenzène, le 4-vinyl-1-cyclohexène, le 1,3,5-trivinylcyclohexane, le trans-1,2-divinylcyclobutane, le 1,5-cyclooctadiène, le 1,3,5-cycloheptatriène, le 1,5,9-cyclododécatriène, le 1,4-cycloheptadiène, le cyclopentadiène, le 2,2'-bicyclopentényle, le 1,4-bis(cyclopentèn-2-yl)-butane, le 4,7,8,9-tétrahydroindène, le 6-méthyl-4,7,8,9-tétrahydroindène, le bicyclo(3,3,0)-octadiène-2,6, le dicyclopentadiène, le 2-méthyl-2,5-norbornadiène, le 5-méthylène-2-norbornène, le 5-éthylidène-2-norbornène, le 5-isopropylidène-2-norbornène, le 5-isopropényl-2-norbornène, le 5-(2'-méthyl-1'-propényl)-2-norbornène, le 5-(1',2'-diméthyl-1'-propényl)-2-norbornène, le 5-(2'-butényl)-2-norbornène, le 6-méthyl-5-(2'-butényl)-2-norbornène, le 6-(3'-cyclohexényl)-2-norbornène, le tricyclopentadiène ou le 6-chlorométhyl-5-isopropényl-2-norbornène.

9. Composition selon la revendication 1, dans laquelle les teneurs en éthylène, en α-oléfine et en polyène dans ledit terpolymère sont respectivement de 40 à 90% en moles, de 10 à 60% en moles et de 0,3 à 20% en moles.

10. Composition selon la revendication 1, dans laquelle ledit monomère aromatique alcénylique à polymériser par greffage sur le terpolymère est représenté par la formule générale suivante

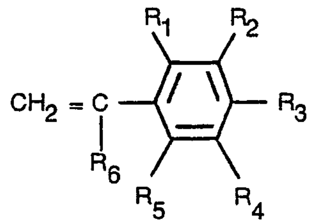

où $R_1$, $R_2$, $R_3$, $R_4$ et $R_5$ sont des atomes d'hydrogène ou d'halogène ou des groupements hydrocarbonés, hydrocarbonés substitués, hydrocarbyloxy ou hydrocarbyloxy substitué, et $R_6$ est un atome d'hydrogène ou un groupement alkyle inférieur ayant de 1 à 4 atomes de carbone.

11. Composition selon la revendication 10, dans laquelle ledit monomère aromatique alcénylique est au moins un composé choisi dans le groupe comprenant le styrène, le 2,4-dichlorostyrène, le p-méthoxy-styrène, le p-méthylstyrène, le p-phénylstyrène, le p-divinylbenzène, le p-(chlorométhoxy)-styrène, l'α-méthylstyrène, l'o-méthyl-α-méthylstyrène, le m-méthyl-α-méthylstyrène, le p-méthyl-α-méthylstyrène et le p-méthoxy-α-méthylstyrène.

12. Composition selon la revendication 1, dans laquelle, dans le copolymère greffé du composé (c), le rapport pondéral de la partie terpolymère éthylène/α-oléfine/polyène à la partie polymère de monomère aromatique alcénylique est 1/3 à 3/1.

13. Composition selon la revendication 1, dans laquelle la quantité de composant (c) est de 5 à 50 parties en poids pour 100 parties en poids de la somme du composant (a) et du composant (b).